(19) Europäisches Patentamt

European Patent Office

Office européen des brevets

(11) **EP 2 506 963 B1**

(12) **EUROPÄISCHE PATENTSCHRIFT**

(45) Veröffentlichungstag und Bekanntmachung des Hinweises auf die Patenterteilung:
**05.11.2014 Patentblatt 2014/45**

(21) Anmeldenummer: **10784530.7**

(22) Anmeldetag: **30.11.2010**

(51) Int Cl.:
***B01J 19/24*** *(2006.01)*

(86) Internationale Anmeldenummer:
**PCT/EP2010/068484**

(87) Internationale Veröffentlichungsnummer:
**WO 2011/067235 (09.06.2011 Gazette 2011/23)**

(54) **REAKTOR ZUR DURCHFÜHRUNG VON AUTOTHERMEN GASPHASENDEHYDRIERUNGEN**

REACTOR FOR CARRYING OUT AUTOTHERMAL GAS PHASE DEHYDROGENATION

RÉACTEUR POUR LA MISE EN OEUVRE DE DÉSHYDROGÉNATIONS AUTOTHERMIQUES EN PHASE GAZEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2009 EP 09177649**

(43) Veröffentlichungstag der Anmeldung:
**10.10.2012 Patentblatt 2012/41**

(73) Patentinhaber: **BASF SE**
**67056 Ludwigshafen (DE)**

(72) Erfinder:
• **KOLIOS, Grigorios**
**67435 Neustadt (DE)**
• **RUPPEL, Wilhelm**
**68163 Mannheim (DE)**
• **WEGERLE, Ulrike**
**67550 Worms (DE)**

• **KESSEL, Jasmina**
**68165 Mannheim (DE)**
• **GERLINGER, Wolfgang**
**67117 Limburgerhof (DE)**
• **MABANDE, Godwin, Tafara, Peter**
**67117 Limburgerhof (DE)**
• **SCHINDLER, Goetz-Peter**
**67071 Ludwigshafen (DE)**
• **KOSTOVA, Albena**
**68163 Mannheim (DE)**
• **OLBERT, Gerhard**
**69221 Dossenheim (DE)**
• **PFAB, Peter**
**67433 Neustadt (DE)**

(56) Entgegenhaltungen:
**EP-A1- 1 167 282      WO-A1-01/76731**
**US-A1- 2004 018 403    US-B2- 7 034 195**

**Beschreibung**

Die Erfindung betrifft einen Reaktor zur Durchführung von autothermen Gasphasendehydrierungen unter Verwendung eines heterogenen Katalysators, der als Monolith ausgebildet ist sowie ein Verfahren unter Verwendung des Reaktors.

Keramische oder metallische Monolithe sind als Katalysatorträger für Edelmetallkatalysatoren in der mobilen und stationären Abgasreinigung etabliert. Die Kanäle bieten der Strömung einen geringen Strömungswiderstand bei gleichzeitig gleichmäßiger Zugänglichkeit der äußeren Katalysatoroberfläche für gasförmige Reaktionsmedien. Dies ist vorteilhaft gegenüber regellosen Haufwerken, bei denen durch unzählige Umlenkungen bei der Strömung um die Partikel ein großer Druckverlust entsteht und die Katalysatoroberfläche eventuell nicht gleichmäßig genutzt wird. Der Einsatz von Monolithen ist generell interessant für katalytische Prozesse mit hohen Volumenströmen und adiabater Reaktionsführung bei hohen Temperaturen. Diese Merkmale treffen in der chemischen Produktionstechnik insbesondere für Dehydrierungsreaktionen zu, die in einem Temperaturbereich von 400°C bis zu 700°C ablaufen.

Fortschritte in der Katalysatortechnik ermöglichen die selektive Verbrennung des Dehydrierwasserstoffes in Anwesenheit von Kohlenwasserstoffen, wie beispielsweise in US 7,034,195 beschrieben. Eine derartige Fahrweise wird als autotherme Dehydrierung bezeichnet und erlaubt, Dehydrierreaktoren direkt zu beheizen, so dass aufwändige Vorrichtungen zur indirekten Vor- und Zwischenheizung des Reaktionsgemisches entfallen. Ein derartiges Verfahren ist beispielsweise in US 2008/0119673 beschrieben. Dieses Verfahren besitzt jedoch den gravierenden Nachteil, dass die Dehydrierung an einem heterogenen Katalysator in Pelletform durchgeführt wird: Der hohe Strömungswiderstand von Pelletschüttungen erfordert einen großen Reaktorquerschnitt und eine entsprechend niedrige Durchströmungsgeschwindigkeit, um den Druckabfall in der katalytisch aktiven Schicht zu begrenzen. Dieser Nachteil wird durch eine sehr aufwändige Vorrichtung zur Dosierung und Verteilung des Sauerstoffes ausgeglichen, was den Vorteil der autothermen Dehydrierung beeinträchtigt.

Aus der nicht vorveröffentlichten Patentanmeldung US 61/179,918 sind heterogene Katalysatoren in Form von Monolithen zum Einsatz in autothermen Gasphasendehydrierungen von Kohlenwasserstoffen bekannt.

Gegenüber der obigen nicht vorveröffentlichten Patentanmeldung war es Aufgabe der vorliegenden Erfindung, ein schlüssiges Konzept zum Einsatz der als Monolith ausgebildeten heterogenen Katalysatoren in Reaktoren zur Durchführung von autothermen Dehydrierungen von Kohlenwasserstoffen enthaltenden Einsatzströmen in großtechnischem Maßstab zur Verfügung zu stellen, das eine sichere Beherrschung der brennbaren Reaktionsmedien bei den hohen Reaktionstemperaturen, häufig im Bereich von etwa 400 bis 700°C, sowie eine einfache Zugänglichkeit und Handhabung der Monolithe, insbesondere beim Rüsten des Reaktors sowie bei einem Katalysatorwechsel, gewährleistet.

Diese Aufgabe wird gelöst durch einen Reaktor in Form eines liegenden Zylinders zur Durchführung einer autothermen Gasphasendehydrierung eines kohlenwasserstoffhaltigen Gasstromes mit einem Sauerstoff enthaltenden Gasstrom unter Erhalt eines Reaktionsgasgemisches an einem heterogenen Katalysator, der als Monolith ausgebildet ist, der dadurch gekennzeichnet ist, dass

- der Innenraum des Reaktors durch ein gasdichtes, in Längsrichtung des Reaktors angeordnetes zylindrisches oder prismatisches, in Umfangsrichtung gasdichtes, an beiden Stirnseiten desselben offenes Gehäuse G in

- einen Innenbereich A, mit einer oder mehreren katalytisch aktiven Zonen, worin jeweils eine Packung aus aufeinander, nebeneinander und übereinander gestapelten Monolithen und vor jeder katalytisch aktiven Zone jeweils eine Mischzone mit festen Einbauten vorgesehen ist und

- einen koaxial zum Innenbereich A angeordneten Außenbereich B aufgeteilt ist,

- mit einer oder mehreren Zuführleitungen für den zu dehydrierenden kohlenwasserstoffhaltigen Gasstrom in den Außenbereich B, Umlenkung des zu dehydrierenden kohlenwasserstoffhaltigen Gasstroms an einem Ende des Reaktors und Zuführung über einen Strömungsgleichrichter in den Innenbereich A,

- mit einer oder mehreren, unabhängig voneinander regelbaren Zuführleitungen, wobei jede Zuführleitung eine oder mehrere Verteilerkammern versorgt für den Sauerstoff enthaltenden Gasstrom in jede der Mischzonen sowie

- mit einer Abführleitung für das Reaktionsgasgemisch der autothermen Gasphasendehydrierung am gleichen Ende des Reaktors wie die Zuführleitung für den zu dehydrierenden kohlenwasserstoffhaltigen Gasstrom.

Es wurde gefunden, dass es wesentlich ist, einen Reaktor zum Einsatz von heterogenen Katalysatoren in Form von Monolithen für die Durchführung von autothermen Gasphasendehydrierungen in der Weise auszubilden, dass mittels eines gasdichten, in Längsrichtung des Reaktors angeordneten zylindrischen oder prismatischen Gehäuses G, das an beiden Stirnseiten desselben offen ist, der Innenraum des Reaktors in einen Innenbereich A und einen konzentrisch um den Innenbereich A angeordneten Außenbereich B aufgeteilt wird, so dass es möglich ist, den Kohlenwasserstoffeinsatzstrom in den Außenbereich B einzuleiten, umzulenken und gemeinsam mit dem Sauerstoff enthaltenden Gasstrom in den Innenbereich A des Reaktors einzuleiten, wobei dieser durchströmt und am anderen Ende des Reaktors, aus dem Innenbereich A das Reaktionsgemisch der autothermen Gasphasendehydrierung abgezogen wird.

Bevorzugt wird der zu dehydrierende kohlenwasserstoffhaltige Gasstrom an einem Ende des Reaktors in den Außenbereich B geleitet, am anderen Ende des Reaktors umgelenkt und über einen Strömungsgleichrichter in den Innenbereich A eingeleitet.

Als Monolith wird vorliegend ein einstückiger, parallelepipedischer Block mit einer Vielzahl von parallel zueinander angeordneten, durchgehenden Kanälen mit engem Querschnitt, im Bereich von etwa 0,5 bis 4 mm, verstanden.

Die Monolithe sind bevorzugt aus einem keramischen Werkstoff als Trägermaterial gebildet, worauf eine katalytisch aktive Schicht, bevorzugt nach dem so genannten Wash-Coating-Verfahren aufgebracht ist.

Das gängigste Material für monolithische Strukturen ist Cordierit (ein Keramikmaterial, das aus Magnesiumoxid, Siliciumoxid und Aluminiumoxid im Verhältnis 2:5:2 besteht). Andere Materialen, deren Monolithstrukturen im Handel erhältlich sind, sind Metalle, Mullit (Mischoxid von Siliciumoxid und Aluminiumoxid, Verhältnis 2:3) und Siliciumcarbid. Diese Materialien haben ähnlich wie Cordierit eine niedrige spezifische BET-Oberfläche (BET = Brunauer, Emmet und Teller) (z.B. für Cordierit typischerweise 0,7 m$^2$/g).

Monolithische Keramikelemente sich mit Zelldichten von 25 - 1600 cpsi (Zellen pro Quadratzoll, entspricht einer Zellgröße von 5 - 0,6 mm) erhältlich. Durch Verwendung einer höheren Zelldichte nimmt die geometrische Oberfläche zu, so daß der Katalysator effizienter verwendet werden kann. Nachteile von höheren Zelldichten sind ein etwas schwierigeres Herstellungsverfahren, eine schwierigere Washcoat-Beschichtung und ein höherer Druckverlust über den Reaktor. Der Druckverlust bleibt jedoch für Monolithen mit hoher Zelldichte im Vergleich zu einem Füllkörperreaktor sehr gering (in der Regel um einen Faktor 10 geringer), was auf die geraden Monolithkanäle zurückzuführen ist.

Zur Herstellung von monolithischen Keramikelementen kann man eine Mischung von Talk, Ton und einer aluminiumoxidlieferenden Komponente und Siliciumoxid herstellen, die Mischung zur Bildung einer Formmasse mischen, die Mischung formen, die Rohware trocknen und sie bei einer Temperatur von 1200 bis 1500°C erhitzen, wobei man eine Keramik erhält, die hauptsächlich Cordierit enthält und einen niedrigen Wärmeausdehnungskoeffizienten aufweist. Allgemein gesprochen kann man eine Paste mit entsprechenden rheologischen Eigenschaften und entsprechender rheologischer Zusammensetzung zu einem Monolithträger extrudieren. Die Paste besteht in der Regel aus einer Mischung von Keramikpulvern geeigneter Größe, anorganischen und/oder organischen Additiven, Lösungsmittel (Wasser), Peptisierungsmittel (Säure) zur Einstellung des pH-Werts und einem permanenten Bindemittel (kolloidale Lösung oder Sol). Bei den Additiven kann es sich um einen Weichmacher oder ein Tensid zur Einstellung der Viskosität der Paste oder ein temporäres Bindemittel, das später abgebrannt werden kann, handeln. Zuweilen werden Glas- oder Kohlefasern zur Erhöhung der mechanischen Festigkeit des Monolithen zugesetzt. Das permanente Bindemittel sollte die innere Festigkeit des Monolithen verbessern.

Cordierit-Monolithe können aus einer Charge hergestellt werden, die aus Talk, Kaolin, calciniertem Kaolin und Aluminiumoxid besteht und zusammen eine chemische Verbindung aus 45 bis 55 Gew.-% $SiO_2$, 32 bis 40 Gew.-% $Al_2O_3$ und 12 bis 15 Gew.-% MgO liefern. Talk ist ein Material, das hauptsächlich aus Magnesiumsilicathydrat, $Mg_3Si_4O_{10}(OH)_2$, besteht. Der Talk kann je nach Quelle und Reinheit auch mit anderen Mineralien wie Tremolit ($CaMg_3(SiO_3)_4$), Serpentin ($3MgO.2SiO_2$, $2H_2O$), Anthophyllit ($Mg_7(OH)_2(Si_4O_{11})_2$), Magnesit ($MgCO_3$), Glimmer und Chlorit vergesellschaftet sein.

Durch Extrusion können auch Monolithe aus anderen Materialien wie SiC, $B_4C$, $Si_3N_4$, BN, AIN, $Al_2O_3$, $ZrO_2$, Mullit, Al-Titanat, $ZrB_2$, Sialon, Perowskit, Kohlenstoff und $TiO_2$ hergestellt werden.

Von Bedeutung hinsichtlich der Eigenschaften der Monolithprodukte sind bei der Extrusion neben der Qualität der Düse der Art und den Eigenschaften der zur Herstellung der formbaren Mischung verwendeten Materialien auch die zugesetzten Additive, der pH-Wert, der Wassergehalt und die bei der Extrusion verwendete Kraft. Bei den bei der Extrusion angewandten Additiven handelt es sich beispielsweise um Cellulosen, $CaCl_2$, Ethylenglykole, Diethylenglykole, Alkohole, Wachs, Paraffin, Säuren und hitzebeständige anorganische Fasern. Neben Wasser können auch andere Lösungsmittel verwendet werden, wie Ketone, Alkohole und Ether. Der Zusatz von Additiven kann zu verbesserten Eigenschaften der Monolithe, wie der Bildung von Mikrorissen, die die Temperaturwechselbeständigkeit verbessert, besserer Porosität und besserem Absorptionsvermögen und erhöhter mechanischer Festigkeit oder geringer Wärmeausdehnung führen.

Die nackte monolithische Struktur wird mit einer Katalysatorträgerschicht, die ein oder mehrere keramische Oxide umfasst, oder einer Katalysatorschicht, die die katalytisch wirksamen Metalle und die fakultativen weiteren (Promotor-)Elemente bereits auf dem keramischen Oxidträgermaterial geträgert umfasst, beschichtet, wobei die Beschichtung nach einer Washcoat-Beschichtungsmethode hergestellt wird.

Die makroporöse Struktur von Keramikmonolithen erleichtert die Verankerung der Washcoatschicht. Die Art und Weise der Washcoat-Beschichtung kann in zwei Methoden unterteilt werden: man kann den makroporösen Träger (teilweise) mit dem eine große Oberfläche aufweisenden Washcoatmaterial füllen oder einen Washcoat als Schicht in den Poren des Keramikträgers abscheiden. Das Porenfüllen führt zur stärksten Wechselwirkung zwischen Monolith und Washcoat, da der größte Teil der Washcoatschicht tatsächlich in den Poren des Trägers fixiert ist und nicht nur an die äußere Oberfläche der Monolithkanäle gebunden ist. Diese Art von Beschichtung wird mit einer Lösung (oder einem Sol) des abzuscheidenden Materials oder mit einer sehr kleine kolloidale Teilchen enthaltenden Lösung durchgeführt. Der Nachteil des Beschichtens mittels Porenfüllung besteht darin, daß die abscheidbare Beschichtungsmenge begrenzt ist, da die Poren irgendwann vollständig gefüllt sein werden und der Washcoat unzugänglich werden wird.

Monolithe bieten günstige Voraussetzungen für die Durchführung der autothermen Dehydrierung von Kohlenwasserstoffen: insbesondere sind engere Reaktorquerschnitte und höhere Strömungsgeschwindigkeiten gegenüber regellos gepackten Festbetten realisierbar, so dass eine effektive, gestufte Zudosierung des Sauerstoffes in den Kohlenwasserstoff enthaltenden Hauptstrom möglich ist. Die Hauptströmungsrichtung durch den Reaktor ist nicht auf eine Abwärtsströmung begrenzt, wie im Fall von regellos gepackten Festbetten.

Nach längerer Standzeit können die in der vorliegenden Schrift empfohlenen Katalysatoren normalerweise auf einfache Art und Weise regeneriert werden, beispielsweise indem man zunächst in ersten Regenerationsstufen Luft, die (vorzugsweise) mit Stickstoff und/oder Wasserdampf verdünnt ist, bei einer Eintrittstemperatur von 300 bis 600°C (in Extremfällen auch bis zu 750°C), häufig von 500 bis 600°C, durch das Katalysatorfestbett leitet. Die Katalysatorbelastung mit Regenerationsgas kann (bezogen auf die Gesamtmenge an regeneriertem Katalysator) beispielsweise 50 bis 10 000 h$^{-1}$ betragen, und der Sauerstoffgehalt des Regenerationsgases kann 0,5 bis 20 Vol.-% betragen.

Danach ist es im Allgemeinen empfehlenswert, auch unter ansonsten identischen Bedingungen mit reinem molekularem Wasserstoff oder mit molekularem Wasserstoff, der mit Inertgas (vorzugsweise Wasserdampf und/oder Stickstoff) verdünnt ist, zu regenerieren (der Wasserstoffgehalt sollte $\geq$ Vol.-% sein).

Das Gehäuse ist vorteilhaft aus einem Werkstoff gebildet, der bei der hohen Belastung durch die Reaktionstemperatur, häufig im Bereich von etwa 400 bis 700°C, mechanisch und chemisch stabil ist und auch keine katalytische Aktivität für die autotherme Gasphasendehydrierung aufweist.

Bevorzugt ist das Gehäuse aus einem Werkstoff gebildet, der hitzebeständig, jedoch ohne Druckbehälterzulassung ist, insbesondere aus einem legierten Stahl, enthaltend Edelstahl mit als Legierungselementen ca. 1,5 bis 2,5 % Silizium, und daneben Nickel und Chrom, bevorzugt in einem Nickel-/Chrom-Verhältnis zwischen 0,5 und 2,0, weiter bevorzugt zwischen 0,8 und 1,0, besonders bevorzugt zwischen 0,8 und 0,085, insbesondere aus einem Edelstahl mit der Werkstoffnummer 1.4835, 1.4854 oder ganz besonders bevorzugt aus einem Edelstahl 1.4841.

Das Gehäuse soll möglichst dünn sein, um einen möglichst guten Wärmeübergang zwischen dem Außenbereich B und dem Innenbereich A zu gewährleisten.

Das Gehäuse kann bevorzugt lose im Reaktor gelagert sein.

Das Gehäuse ist bevorzugt als Quader ausgebildet.

Bevorzugt sind die Seitenwände des als Quader ausgebildeten Gehäuses einzeln abnehmbar ausgebildet, dergestalt, dass eine komplette Packung oder einzelne Monolithe einer Packung aus einer katalytisch aktiven Zone ausgetauscht werden können.

Erfindungsgemäß werden die einzelnen Monolithe nebeneinander, übereinander und hintereinander, in der erforderlichen Anzahl, um eine katalytisch aktive Zone auszufüllen, unter Ausbildung einer Packung, gestapelt.

Vor jeder Packung ist jeweils eine Mischzone mit festen Einbauten, die nicht katalytisch aktiv sind, vorgesehen. In der Mischzone erfolgt die Vermischung des kohlenwasserstoffhaltigen Gasstromes mit dem Sauerstoff enthaltenden Strom, wobei in der in Strömungsrichtung zuerst angeströmten Mischzone die Vermischung des Sauerstoff enthaltenden Gasstromes mit dem kohlenwasserstoffhaltigen Einsatzstrom erfolgt und in den darauf folgend angeströmten Mischzonen jeweils eine Zwischeneinspeisung eines Sauerstoff enthaltenden Gasstromes in das noch zu dehydrierende, Kohlenwasserstoffe enthaltende Reaktionsgasgemisch erfolgt.

Durch die Ausbildung des Reaktors als liegender Zylinder ist der Innenraum B, der die Monolith-Packungen umfasst, großflächig abgestützt und dadurch mechanisch entlastet. Darüber hinaus ist bei dieser Reaktoranordnung die Zugänglichkeit zu den einzelnen Monolithpackungen einfacher.

Die nebeneinander, übereinander und hintereinander zu einer Packung gestapelten Monolithe sind bevorzugt in einer Blähmatte oder in einem Mineralfaservlies eingehüllt und in eine Einhausung mit Verspanneinrichtung eingesetzt. Als Mineralfaservliese werden bevorzugt Vliese eingesetzt, wie sie für den Einsatz für Abgaskatalysatoren bekannt sind, beispielsweise Interam® Lagermatten der Firma 3M®.

Blähmatten sind aus der katalytischen Abgasreinigung bekannt und beispielsweise in DE-A 40 26 566 beschrieben: Sie bestehen im Wesentlichen aus Keramikfasern mit Glimmereinlagerung. Infolge der Glimmereinlagerung hat die Blähmatte bei steigenden Temperaturen das Bestreben sich auszudehnen, wodurch eine besonders sichere Halterung des darin eingehüllten Körpers auch bei höheren Temperaturen erreicht wird.

Die Mineralfaservliese oder Blähmatten werden so ausgewählt, dass sie sich unter Wärmeeinwirkung ausdehnen und dass sie die, in der Regel keramischen Monolithe, gegen das Gehäuse abdichten, insbesondere eine Reibung der Monolithe am Gehäuse sowie eine Bypassströmung des Reaktionsgasgemisches an der Innenwand des Gehäuses verhindern.

Der Mantel des Reaktors ist bevorzugt aus einem für Druckbehälter zugelassenen legierten Stahl gebildet, insbesondere aus einem legierten Stahl mit der Werkstoffnummer 1.4541 oder 1.4910, mit einem legierten Stahl mit der Werkstoffnummer 1.4841 plattiert, oder mit Schamotteausmauerung ausgebildet.

Jede Mischzone umfasst bevorzugt jeweils einen Rohrverteiler, gebildet aus einer Vielzahl von parallel zueinander, in einer Ebene senkrecht zur Längsrichtung des Reaktors angeordneten Einsteckrohren, die mit einer oder mehreren der Verteilerkammern verbunden sind, und die eine Vielzahl von gleichmäßig zueinander beabstandeten Austrittsöffnungen für den Sauerstoff enthaltenden Gasstrom aus dem Einsteckrohr aufweisen, sowie eine Vielzahl von gleichmäßig zueinander beabstandeten Mischkörpern.

Die Mischkörper können vorteilhaft als Mischplatten ausgebildet sein.

An dem Reaktorende, an dem die Abführleitung für das Reaktionsgasgemisch der autothermen Gasphasendehydrierung angeordnet ist, ist vorteilhaft ein Rohrbündelwärmetauscher vorgesehen, mit einem Bündel von Rohren, durch die das Reaktionsgasgemisch zur autothermen Gasphasendehydrierung geleitet wird, sowie mit Zwischenräumen zwischen den Rohren, durch die, im Gegenstrom zum Reaktionsgemisch der autothermen Gasphasendehydrierung, der zu dehydrierende kohlenwasserstoffhaltige Gasstrom geleitet wird.

Der Rohrbündelwärmetauscher ist bevorzugt aus einem hoch warmfesten Edelstahl, insbesondere einem Edelstahl mit der Werkstoffnummer 1.4910 gebildet, die Rohre des Rohrbündelwärmetauschers an beiden Enden derselben in Rohrböden sind vorteilhaft spaltfrei durch Hinterbodenschweißung eingebracht sind und die Rohrböden des Rohrbündelwärmetauschers auf der Heißgasseite derselben mit einem hitzebeständigen Edelstahl, insbesondere mit einem Edelstahl mit der Werkstoffnummer 1.4841, plattiert.

Vorteilhaft ist der Rohrbündelwärmetauscher aus einer Inconel®-Legierung gebildet.

Die Zuführleitungen für den Sauerstoff enthaltenden Gasstrom, die Verteilerkammern, die Einsteckrohre und die Mischkörper für den Sauerstoff enthaltenden Gasstrom in jede Mischzone sind vorteilhaft aus einer hoch warmfesten Nickel-Chrom-Eisen-Legierung gebildet, wobei der Massenanteil von Nickel und Chrom insgesamt mindestens 90 Gew.-% der Gesamtmasse der Legierung beträgt, und das Nickel/Chromverhältnis zwischen etwa 1,5 bis 5,5, bevorzugt bei etwa 2,0, liegt.

Als Werkstoff für die Zuführleitungen und die Verteilerkammern wird bevorzugt eine Inconel®-Legierung, insbesondere Inconel® 690, entsprechend der Werkstoffnummer 2.4642, eingesetzt.

Bevorzugt ist an der Stirnseite des Gehäuses G, an der der kohlenwasserstoffhaltige Gasstrom in den Innenbereich A eingeleitet wird, ein Strömungsgleichrichter angeordnet.

Gegenstand der Erfindung ist auch ein Verfahren zur Durchführung von autothermen Dehydrierungen unter Verwendung des vorstehend beschriebenen Reaktors.

In einer bevorzugten, voll kontinuierlichen Fahrweise, können zwei oder mehrere Reaktoren eingesetzt werden, wobei mindestens ein Reaktor für die autotherme Gasphasendehydrierung genutzt und gleichzeitig mindestens ein weiterer Reaktor regeneriert wird.

Die autotherme Gasphasendehydrierung ist bevorzugt eine Dehydrierung von Propan, von Butan, von Isobutan, von Buten zu Butadien oder von Ethylbenzol zu Styrol.

Der erfindungsgemäße Reaktor und das erfindungsgemäße Verfahren weisen insbesondere die Vorteile auf, dass eine optimierte Reaktoranordnung bezüglich der mechanischen Belastung, der Handhabung oder der Verbindung mit Peripherieapparaten, eine sichere Beherrschung der brennbaren Reaktionsmedien unter Vermeidung von Temperaturspitzen und entsprechender Werkstoffbelastung sowie eine einfache Zugänglichkeit und Handhabung der einzelnen Monolithe gewährleistet wird. Darüber hinaus ermöglicht die erfindungsgemäße Reaktoranordnung eine optimale Haupt- und Zwischeneinspeisung von Sauerstoff.

Die Erfindung ermöglicht es, autotherme Gasphasendehydrierungen mit niedrigeren Investitions- und Betriebskosten durchzuführen, sowie Monolithkatalysatoren mit höherer Last und verbesserter Selektivität für autotherme Gasphasendehydrierungen zu nutzen.

Die Erfindung wird im Folgenden anhand einer Zeichnung näher erläutert.

Es zeigen im Einzelnen:

Figur 1      einen Längsschnitt durch eine bevorzugte Ausführungsform eines erfindungsgemäßen Reaktors in vertikaler Ebene,

Figur 2      eine Teildarstellung eines Längsschnitts durch eine weitere bevorzugte Ausführungsform eines erfindungsgemäßen Reaktors in vertikaler Ebene,

Figur 3      eine weitere bevorzugte Ausführungsform eines erfindungsgemäßen Reaktors in vertikaler Ebene,

Figur 4      eine Teildarstellung einer bevorzugten Ausführungsform eines erfindungsgemäßen Reaktors im Längsschnitt in vertikaler Ebene,

Figur 5      einen Ausschnitt aus einem Längsschnitt durch einen erfindungsgemäßen Reaktors im Bereich eines Einsteckrohrs,

Figur 6      einen Ausschnitt durch einen Längsschnitt in horizontaler Richtung durch einen erfindungsgemäßen Reaktor im Bereich einer Mischzone 6,

Figur 7      eine schematische Darstellung einer Packung aus aufeinander und nebeneinander gestapelten Monolithen 4, mit vergrößerter Darstellung des in Figur 7 eingekreisten Teilbereichs in Figur 7A,

Figur 8      eine schematische Darstellung eines Ausschnitts aus einer Packung mit einer Halteeinrichtung zwischen den Monolithen, und

Figur 9      eine weitere schematische Darstellung eines Ausschnitts aus einer Packung mit Halteeinrichtungen zwischen den Monolithen.

In den Figuren bezeichnen gleiche Bezugszeichen jeweils gleiche oder entsprechende Merkmale.

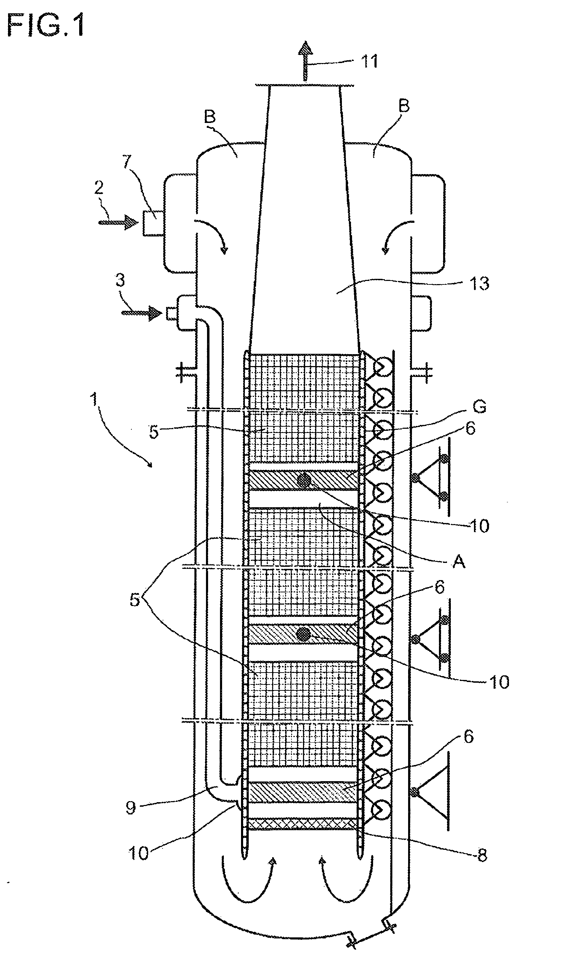

Der Längsschnitt in vertikaler Richtung in Figur 1 zeigt schematisch eine bevorzugte Ausführungsform eines erfindungsgemäßen Reaktors 1, der mit einem zu dehydrierenden kohlenwasserstoffhaltigen Gasstrom 2 über eine Zuführleitung 7 und einen Sauerstoff enthaltenden Gasstrom 3, mit Zuführleitung 9 und Verteilerkammer 10 gespeist wird.

Eine Packung 5 mit davor angeordneter Mischzone 6 bildet jeweils ein Reaktormodul.

Ein in Längsrichtung des Reaktors 1 angeordnetes Gehäuse G teilt den Innenraum des Reaktors 1 in einen Innenbereich A und einen Außenbereich B auf.

Im Innenbereich A sind auf-, neben- und hintereinander Monolithe 4 zu jeweils einer Packung 5 gestapelt, wobei vor jeder Packung 5 jeweils eine Mischzone 6 vorgesehen ist.

Der zu dehydrierende kohlenwasserstoffhaltige Gasstrom 2 strömt an einem Ende des Reaktors 1 über die Zuführleitung 7 in den Außenbereich B ein, wird am entgegengesetzten Ende des Reaktors umgelenkt und strömt über einen Strömungsgleichrichter 8 in den Innenraum A ein. Die Reaktion findet im Innenraum A, innerhalb des Gehäuses G statt. Das Reaktionsgasgemisch verlässt den Innenraum A an dem dem Eintritt des zu dehydrierenden kohlenwasserstoffhaltigen Gasstroms 2 in den Innenraum A entgegengesetzten Ende, und wird über eine Abführleitung 11 abgezogen. Zwischen der Abführleitung 11 und dem Gehäuse G ist ein Übergangsteil 13 angeordnet, das den Übergang von der in der Figur dargestellten bevorzugten quaderförmigen Geometrie des Gehäuses G zur zylindrischen Geometrie der Abführleitung 11 bewirkt.

Aus der Figur ist auch zu erkennen, dass die einzelnen Reaktormodule, umfassend jeweils eine Packung 5 aus auf-, neben- und hintereinander gestapelten Monolithen 4 sowie eine Mischzone 6, im Reaktorinnenraum beweglich gelagert sind, so dass sie einzeln in den Reaktor 1 einschiebbar sind. Hiernach werden die einzelnen Module miteinander verbunden, gegebenenfalls verschraubt oder verschweißt, jedoch so, dass sie bei Bedarf wieder aufgetrennt werden können. Bevorzugt sollen die einzelnen Module in einer Art Kompensator miteinander verbunden werden, um den thermischen Belastungen im Langzeitbetrieb gerecht zu werden.

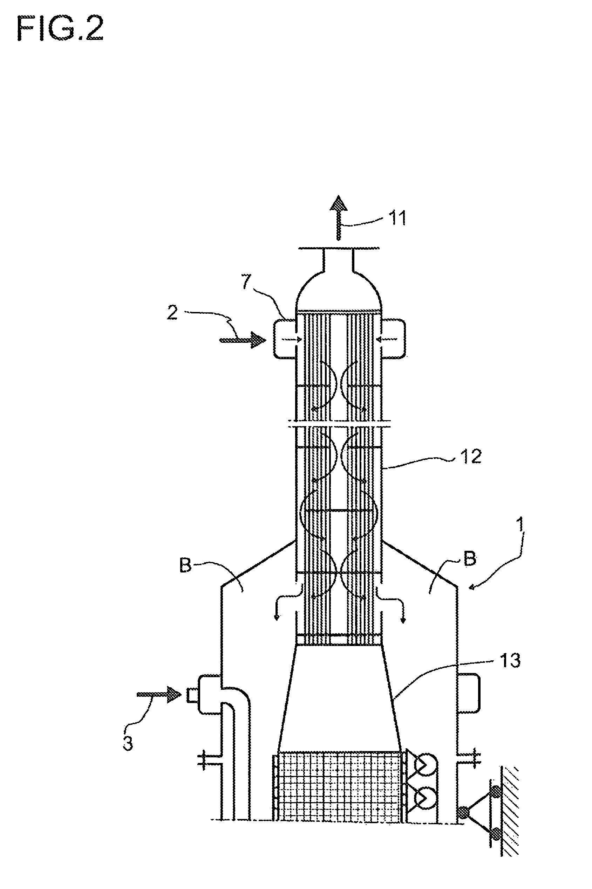

Figur 2 zeigt einen Ausschnitt aus einem Längsschnitt durch eine bevorzugte Ausführungsform eines erfindungsgemäßen Reaktors 1 in vertikaler Richtung, mit Integration eines Wärmetauschers 12 in den Reaktor 1. Das Reaktionsgemisch strömt durch die Rohre des Rohrbündelwärmetauschers, und gibt in indirektem Wärmetausch Wärme an den Eduktstrom, den zu dehydrierenden kohlenwasserstoffhaltigen Gasstrom 2 ab, der über einen Ringkanal durch Öffnungen in der Wärmetauscherwand in den Mantelrand des Wärmetauschers einströmt, die Rohre radial von außen nach innen und von innen nach außen umströmt, und im inneren rohrfreien Bereich des Rohrbündelwärmetauschers, entsprechend der Geometrie desselben, umgelenkt wird. Der vorgewärmte Eduktstrom wird anschließend durch Öffnungen der zylindrischen Außenwand des Rohrbündelwärmetauschers in den Innenraum D des Reaktors 1 geleitet. Entsprechend den thermischen Anforderungen kann der Wärmetauscher fest oder auch als Schwimmkopfvariante ausgeführt sein. Die Schwimmkopfvariante erfordert eine entsprechende Abdichtung und hat den Vorteil einer Zugänglichkeit des Systems für die Entfernung des Wärmetauschers, insbesondere für Wartungsarbeiten.

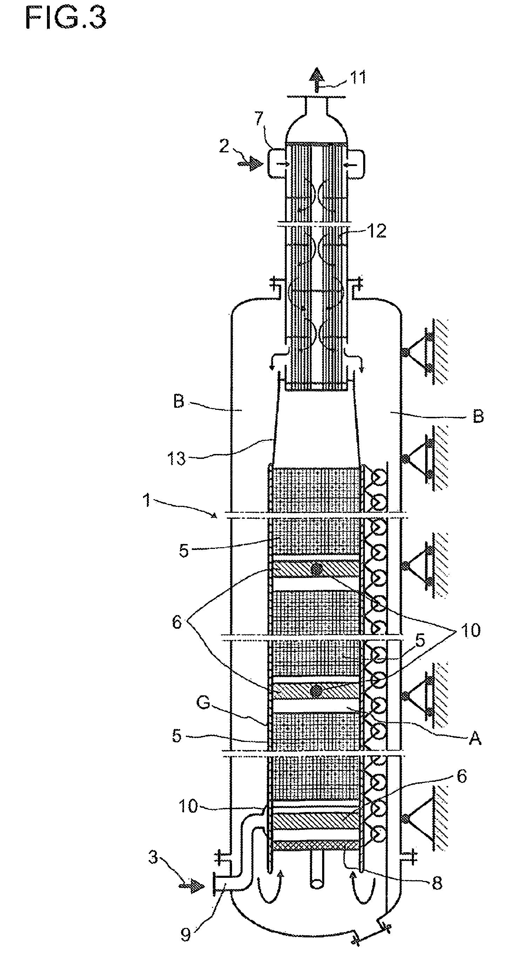

Figur 3 zeigt eine weitere bevorzugte Ausführungsform eines erfindungsgemäßen Reaktors in einem vertikalen Längsschnitt, mit ziehbarem Wärmetauscher. Indem der Sauerstoff enthaltenden Gasstrom 3 über die Zuführleitung 9 mit Verteilerkammer 10 an dem Ende des Reaktors 1 angeordnet ist, die der Zuführung des Eduktstroms, des zu dehydrierenden kohlenwasserstoffhaltigen Gasstroms 2 entgegengesetzt ist, kann der Wärmetauscher 12 in einfacher Weise aus dem Reaktor 1 gezogen werden. In dieser Ausführungsform muss der Wärmetauscher 12 als Schwimmkopf ausgeführt sein, der dann nach dem Einbau der einzelnen Module, umfassend jeweils eine Packung aus Monolithen 5 und eine Mischzone 6, seitlich eingeschoben wird. Diese Anordnung hat jedoch den Nachteil, dass die Zuleitungen 9, 10 für das sauerstoffhaltige Gas 3 über einen Zugang über ein Mannloch verschweißt beziehungsweise verbunden werden müssen.

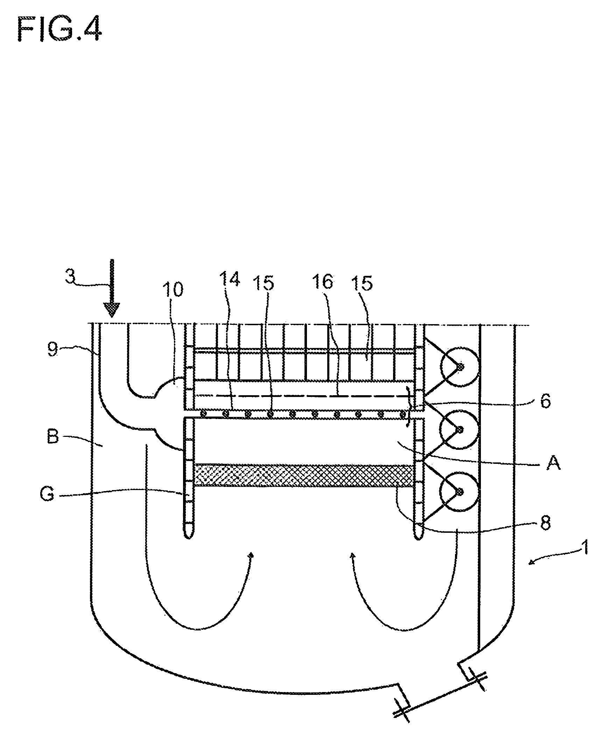

Die Teildarstellung in Figur 4 eines vertikalen Längsschnitts durch einen Reaktor 1 verdeutlicht den Bereich der Anströmung des in Strömungsrichtung ersten Reaktormoduls. Die Figur verdeutlicht die Anordnung des Strömungsgleichrichters 8 sowie die erste in Strömungsrichtung angeordnete Mischzone 6, umfassend einen Rohrverteiler, wovon in der Längsschnittdarstellung ein Einsteckrohr 14 im Längsschnitt zu sehen ist, mit gleichmäßig zueinander beabstandeten Austrittsöffnungen 15 für den Sauerstoff enthaltenden Gasstrom 3

aus dem Einsteckrohr 14.

Stromabwärts des Rohrverteilers, über den der Sauerstoff enthaltende Gasstrom 3 über eine Zuführleitung 9 und eine Verteilerkammer 10 eingedüst wird, sind hiervon definiert beabstandete Einbauten 16, die als Mischkörper 16 ausgebildet sind, angeordnet. Die Einbauten 16 verkürzen die Einmischzeit und die Mischstrecke.

Der Mischkörper kann auch definiert porös gestaltet sein, das heißt, dass das Öffnungsverhältnis nicht gleichförmig über die gesamte Ausdehnung des Mischkörpers ist, sondern so ausgebildet ist, dass die Verweilzeit beziehungsweise das Rückstromgebiet reduziert wird.

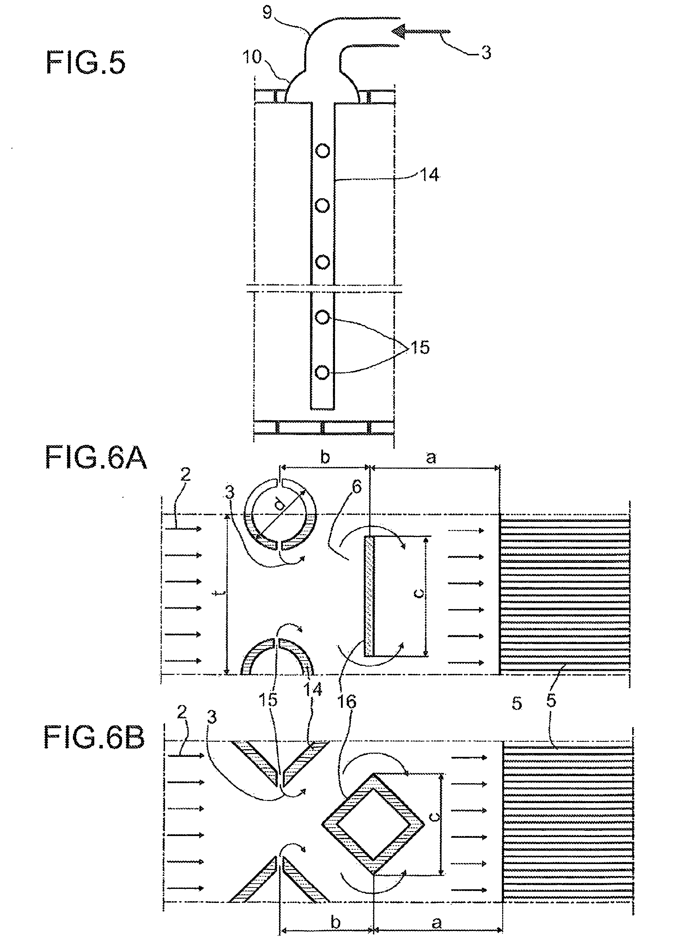

Figur 5 zeigt einen Ausschnitt aus dem Rohrverteiler, mit Zuführleitung 9 und Verteilerkammer 10 zu dem Sauerstoff enthaltenden Gasstrom 3 und Längsschnitt durch ein über die Verteilerkammer 10 angeströmtes Einsteckrohr 14 mit Austrittsöffnungen 15 für den Sauerstoff enthaltenden Gasstrom 3 aus dem Einsteckrohr 14.

In der Figur ist mit I die Länge des Einsteckrohrs 14, mit d der Durchmesser des Einsteckrohrs 14, mit $d_L$ der Durchmesser einer Austrittsöffnung 15 und mit $S_L$ der Abstand zwischen zwei aufeinanderfolgenden Austrittsöffnungen 15 bezeichnet.

Die Figuren 6A und 6B zeigen zwei Varianten für bevorzugte Ausführungsformen des Einsteckrohrs 14 und des Mischkörpers 16:

Die Schnittdarstellungen in den Figuren 6A und 6B sind jeweils in einer Ebene senkrecht zur Darstellung in Figur 5 geführt, das heißt sie zeigen jeweils einen Ausschnitt aus einem Längsschnitt in horizontaler Richtung durch einen erfindungsgemäßen Reaktor 1.

In der in Figur 6A dargestellten Variante weisen die Einsteckrohre 14 einen runden Querschnitt auf und der hiervon beabstandete feste Einbau ist als Mischblech 16 ausgebildet.

Demgegenüber zeigt die Figur 6B ein Einsteckrohr 14, das als Vierkantrohr ausgebildet ist, und als hiervon beabstandeten festen Einbau, zur Verbesserung der Mischgüte, einen Mischkörper 14 (Volumenkörper).

In den Figuren 6A und 6B ist

mit t der Abstand der Mittelpunkte zweier aufeinander folgender Einsteckrohre 14,

mit a der Abstand des Mischblechs oder Mischkörpers 16 zur Packung 5, mit c die Breite des Mischbleches beziehungsweise Mischkörpers zwischen zwei aufeinander folgenden Durchtrittsöffnungen für den Sauerstoff enthaltenden Gasstrom 3 und

mit e die Höhe des Mischkörpers in Strömungsrichtung bezeichnet.

Für die obigen Abmessungen gelten die folgenden bevorzugten Verhältnisse:

t = F1 · d
F1 = 1 - 4
bevorzugt F1 = 2.5

b = F2 · d
F2 = 1 - 2
bevorzugt F2 = 1.5
a = F3 - d
F3 = 1 - 2
bevorzugt F3 = 1.25
c = F4 - d
F4 = 1.5 - 3.5
bevorzugt F4 = 2,25
I = F5 · d
F5 = 0.1 - 2
bevorzugt F5 = 1.0
$^S_L$ = F6 · d
F6 = 0.2 - 0.5
bevorzugt F6 = 0.25

$$d_L = \sqrt{\frac{0{,}2 \cdot F6 \cdot d^3}{I}}$$

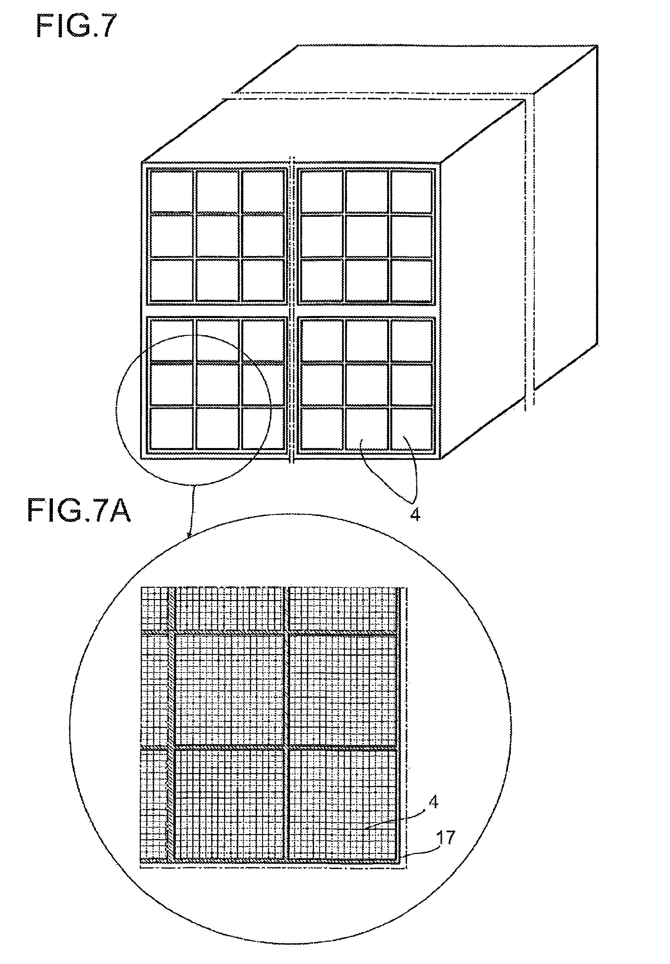

Figur 7 zeigt im Detail den Aufbau einer Packung 5 aus neben- und übereinander gestapelten Monolithen 4. Die Packung 5 weist in der Anströmfläche 14 x 14 Monolithe 4 Wabenkörper auf. Die Monolithe 4 sind gegeneinander und zum Gehäuse durchgehend mittels Dichtplatten (Blähmatten) abgedichtet. Dieses Abdichtsystem soll auch zum Stabilisieren dienen, um den Anströmkräften gerecht zu werden, und auch Unebenheiten (Toleranzen) der Monolithe 4 zu kompensieren. Insbesondere sollen die Blähmatten auch verhindern, dass sich die Monolithe 4 in Strömungsrichtung verschieben.

In Strömungsrichtung sind, in der bevorzugten Ausführungsform, beispielhaft 17 bis 18 Monolithe angeordnet.

Figur 7A zeigt eine Detailansicht der Darstellung in Figur 7, mit bevorzugten Abmessungen in Millimetern für die einzelnen Monolithe 4 und die dazwischen befindlichen Abstände.

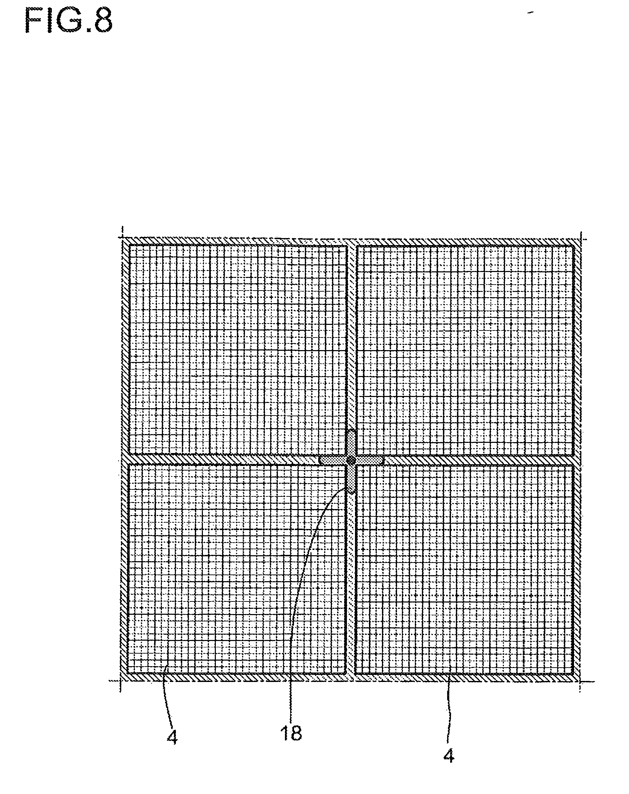

Figur 8 zeigt eine weitere, bevorzugte Halterung der einzelnen Monolithe (Wabenkörper) 4 mittels Halteeinrichtungen 18, die beispielhaft als Stabilisierungsstege ausgebildet sind. Die Halteeinrichtung 18 besteht aus konischen Elementen mit definierter Geometrie, die zwischen die Monolithe 4 geklemmt und über ein Spannsystem stabilisiert werden. Die konische Geometrie ist erforderlich, damit die Monolithe nicht verstopfen. Die Figur verdeutlicht ein konisches Eckelement mit zentraler (Öffnung für den Zugdraht. Diese Konstruktionsweise ist erforderlich, um den Druckverlustkräften entgegenzuwirken.

Darüber hinaus ist es auch möglich, die Monolithe 4 mit einer teilelastischen keramischen Masse auszukleiden.

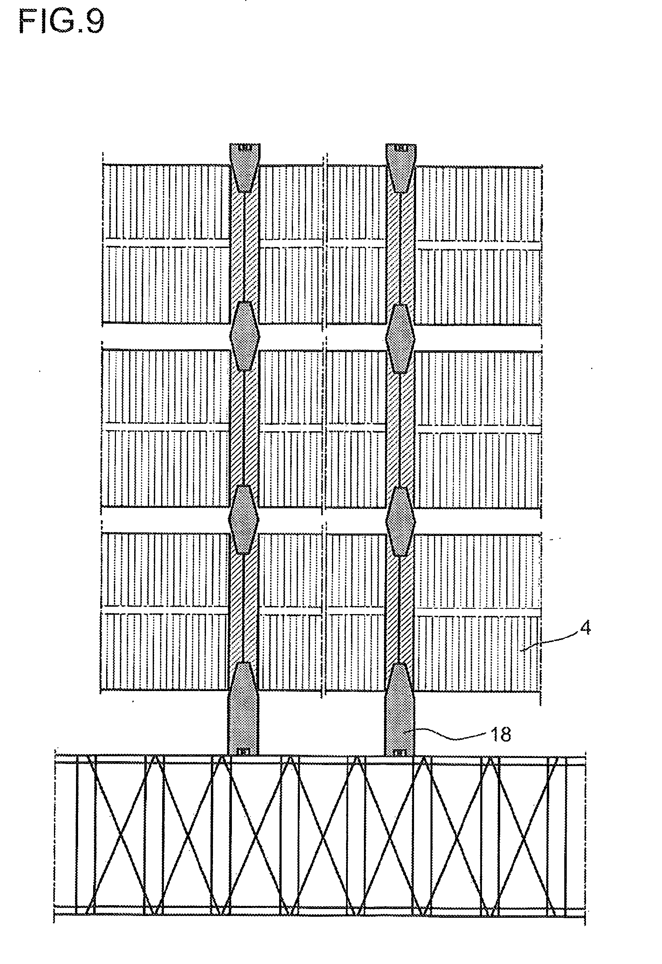

Die schematische Darstellung in Figur 9 verdeutlicht die aus konischen Elementen gebildete Halteeinrichtung 18, bei der die konischen Elemente über ein Spannsystem stabilisiert sind. Besonders empfehlenswert ist es, wenn die konischen Elemente in den Eckbereichen der Monolithe 4 angeordnet sind. Die übrige Zwischenbeabstandung zwischen den Monolithen 4 wird, wie üblich, mit Dichtmaterial verschlossen.

Eine derartig stabilisierte Packung kann auch, wie in der Figur 9 schematisch angedeutet, einer vertikalen Anordnung der Monolithe dienen.

Bezugszeichenliste

1 Reaktor
2 Kohlenwasserstoffatom
3 O₂ enthaltender Gasstrom
4 Monolithe
5 Packung aus 4
6 Mischzone
7 Zuführleitung für 2
8 Strömungsgleichrichter
9 Zuführleitung für 3
10 Verteilerkammer für 3 in jede Mischzone 6
11 Abführleitung für das Reaktionsgasgemisch
12 Wärmetauscher
13 Übergangsteil von rechteckigem auf runden Querschnitt
14 Einsteckrohr
15 Austrittsöffnungen für O₂ enthaltenden Gasstrom 3 aus dem Einsteckrohr 14
16 Mischkörper
17 Dichtplatten zwischen den Monolithen 4
18 Stabilisierungssteg (Halteeinrichtung)

**Patentansprüche**

1. Reaktor (1) in Form eines liegenden Zylinders zur Durchführung einer autothermen Gasphasendehydrierung eines kohlenwasserstoffhaltigen Gasstromes (2) mit einem Sauerstoff enthaltenden Gasstrom (3) unter Erhalt eines Reaktionsgasgemisches, an einem heterogenen Katalysator, der als Monolith (4) ausgebildet ist, **dadurch gekennzeichnet, dass**

    - der Innenraum des Reaktors (1) durch ein lösbar, in Längsrichtung des Reaktors (1) angeordnetes kreiszylindrisches oder prismatisches, in Umfangsrichtung gasdichtes, an beiden Stirnseiten desselben offenes Gehäuse G in
    - einen Innenbereich A, mit einer oder mehreren katalytisch aktiven Zonen (5), worin jeweils eine Packung aus aufeinander, nebeneinander und hintereinander gestapelten Monolithen (4) und vor jeder katalytisch aktiven Zone (5) jeweils eine Mischzone (6) mit festen Einbauten vorgesehen ist und

    - einen koaxial zum Innenbereich A angeordneten Außenbereich B aufgeteilt ist,
    - mit einer oder mehreren Zuführleitungen (7) für den zu dehydrierenden kohlenwasserstoffhaltigen Gasstrom (2) in den Außenbereich B, Umlenkung des zu dehydrierenden Kohlenwasserstoffstroms (2) an einem Ende des Reaktors (1) und Zuführung über einen Strömungsgleichrichter (8) in den Innenbereich A,
    - mit einer oder mehreren, unabhängig voneinander regelbaren Zuführleitungen (9) wobei jede Zuführleitung (9) eine oder mehrere Verteilerkammern (10) versorgt, für den Sauerstoff enthaltenden Gasstrom (3) in jede der Mischzonen (6), sowie
    - mit einer Abführleitung (11) für das Reaktionsgasgemisch der autothermen Gasphasendehydrierung.

2. Reaktor (1) nach Anspruch 1, **dadurch gekennzeichnet, dass** der zu dehydrierende kohlenwasserstoffhaltige Gasstrom (2) an einem Ende des Reaktors (1) in den Außenbereich B geleitet wird, am anderen Ende des Reaktors (1) umgelenkt und über einen Strömungsgleichrichter (8) in den Innenbereich A eingeleitet wird.

3. Reaktor (1) nach Anspruch 1 oder 2, **dadurch gekennzeichnet, dass** das darin angeordnete Gehäuse G als Quader ausgebildet ist.

4. Reaktor (1) nach einem der Ansprüche 1 bis 3, **dadurch gekennzeichnet, dass** im Innenbereich A zwei oder mehrere katalytisch aktive Zonen (5) mit jeweils einer Packung aus aufeinander, nebeneinander und hintereinander gestapelten Monolithen (4) vorgesehen sind.

5. Reaktor (1) nach einem der Ansprüche 1 bis 4, **dadurch gekennzeichnet, dass** die nebeneinander, übereinander und hintereinander zu einer Packung gestapelten Monolithen (4) in einer Blähmatte oder in einem Mineralfaservlies eingehüllt und in eine Einhausung mit Verspanneinrichtung eingesetzt sind.

6. Reaktor (1) nach einem der Ansprüche 3 bis 5, **dadurch gekennzeichnet, dass** die Seitenwände des als Quader ausgebildeten Gehäuses G einzeln abnehmbar ausgebildet sind, dergestalt, dass eine komplette Packung oder einzelne Monolithe (4) einer Packung aus einer katalytisch aktiven Zone (5) ausgetauscht werden können.

7. Reaktor (1) nach einem der Ansprüche 1 bis 6, **dadurch gekennzeichnet, dass** das Gehäuse G aus einem Werkstoff gebildet ist, der hitzebeständig, jedoch ohne Druckbehälterzulassung ist, insbesondere aus einem legierten Stahl, enthaltend _als Legie-_

*rungselemente* ca. 1,5 bis 2,5 % Silizium, und daneben Nickel und Chrom, bevorzugt in einem Nickel-Chrom-Verhältnis zwischen 0,5 und 2,0, weiter bevorzugt zwischen 0,8 und 1,0, besonders bevorzugt zwischen 0,8 und 0,085, insbesondere aus einem Edelstahl mit der Werkstoffnummer 1.4835, 1.4854 oder ganz besonders bevorzugt aus einem Edelstahl 1.4841.

8. Reaktor (1) nach einem der Ansprüche 1 bis 7, **dadurch gekennzeichnet, dass** der Mantel des Reaktors (1) aus einem für Druckbehälter zugelassenen legierten Stahl gebildet ist, insbesondere aus einem legierten Stahl mit der Werkstoffnummer 1.4541 oder 1.4941, mit einem legierten Stahl mit der Werkstoffnummer 1.4841 plattiert, oder mit Schamotteausmauerung ausgebildet ist.

9. Reaktor (1) nach einem der Ansprüche 1 bis 8, **dadurch gekennzeichnet, dass** jede Mischzone (6) jeweils einen Rohrverteiler umfasst, gebildet aus einer Vielzahl von parallel zueinander, in einer Ebene senkrecht zur Längsrichtung des Reaktors (1) angeordneten Einsteckrohren (14), die mit einer oder mehreren der Verteilerkammern (10) verbunden sind, und die eine Vielzahl von gleichmäßig zueinander beabstandeten Austrittsöffnungen (15) für den Sauerstoff enthaltenden Gasstrom (3) aus dem Einsteckrohr (14) aufweisen, sowie einer Vielzahl von gleichmäßig zueinander beabstandeten Mischkörpern (16).

10. Reaktor (1) nach Anspruch 9, **dadurch gekennzeichnet, dass** die Mischkörper (16) als Mischplatten ausgebildet sind.

11. Reaktor (1) nach einem der Ansprüche 1 bis 10, **dadurch gekennzeichnet, dass** an dem Reaktorende, an dem die Abführleitung (11) für das Reaktionsgasgemisch der autothermen Gasphasendehydrierung angeordnet ist, ein Rohrbündelwärmetauscher (12) vorgesehen ist, mit einem Bündel von Rohren, durch die das Reaktionsgasgemisch zur autothermen Gasphasendehydrierung geleitet wird, sowie Zwischenräumen zwischen den Rohren, durch die, im Gegenstrom zum Reaktionsgemisch der autothermen Gasphasendehydrierung, der zu dehydrierende kohlenwasserstoffhaltige Gasstrom (2) geleitet wird.

12. Reaktor (1) nach Anspruch 11, **dadurch gekennzeichnet, dass** der Rohrbündelwärmetauscher (12) aus einem hoch warmfesten Edelstahl, insbesondere einem Edelstahl mit der Werkstoffnummer 1.4910 gebildet ist, dass die Rohre des Rohrbündelwärmetauschers (12) an beiden Enden derselben in Rohrböden spaltfrei durch Hinterbodenschweißung eingebracht sind und dass die Rohrböden des Rohrbündelwärmetauschers (12) auf der Heißgasseite derselben mit einem hitzebeständigen Edelstahl, insbesondere mit einem Edelstahl mit der Werkstoffnummer 1.4841, plattiert sind.

13. Reaktor 1 nach Anspruch 11 oder 12, **dadurch gekennzeichnet, dass** der Rohrbündelwärmetauscher (12) aus einer Inconel®-Legierung gebildet ist.

14. Reaktor (1) nach einem der Ansprüche 1 bis 13, **dadurch gekennzeichnet, dass** die Zuführleitungen (9) für den sauerstoffenthaltenden Gasstrom (3), die Verteilerkammern (10), die Einsteckrohre (14) und die Mischkörper (16) für den sauerstoffenthaltenden Gasstrom (3) in jede Mischzone (6) aus einer hoch warmfesten Nickel-Chrom-Eisen-Legierung gebildet sind, wobei der Massenanteil von Nickel und Chrom insgesamt mindestens 90 Gew.-% der Gesamtmasse der Legierung beträgt, und das Nickel/Chromverhältnis zwischen etwa 1,5 bis 5,5, bevorzugt bei etwa 2,0, liegt.

15. Reaktor (1) nach Anspruch 14, **dadurch gekennzeichnet, dass** als Werkstoff für die Zuführleitungen (9) und die Verteilerkammern (10) eine Inconel®-Legierung, insbesondere Inconel® 690, entsprechend der Werkstoffnummer 2.4642, eingesetzt wird.

16. Verfahren zur Durchführung einer autothermen Gasphasendehydrierung unter Verwendung eines Reaktors nach einem der Ansprüche 1 bis 15.

17. Verfahren nach Anspruch 16, **dadurch gekennzeichnet, dass** zwei oder mehrere Reaktoren (1) nach einem der Ansprüche 1 bis 15 eingesetzt werden, wobei mindestens ein Reaktor (1) für die autotherme Gasphasendehydrierung genutzt und gleichzeitig mindestens ein weiterer Reaktor (1) regeneriert wird.

18. Verfahren nach Anspruch 16 oder 17, **dadurch gekennzeichnet, dass** die autotherme Gasphasendehydrierung eine Dehydrierung von Propan, von Butan, von Isobutan, von Buten zu Butadien oder von Ethylbenzol zu Styrol ist.

**Claims**

1. A reactor (1) in the form of a horizontal cylinder for carrying out an autothermal gas-phase dehydrogenation of a hydrocarbon-comprising gas stream (2) by means of an oxygen-comprising gas stream (3) to give a reaction gas mixture over a heterogeneous catalyst configured as monolith (4), wherein

- the interior of the reactor (1) is divided by a detachable, cylindrical or prismatic housing G which is arranged in the longitudinal direction of the reactor (1) and is gastight in the circumferential direction and open at two end faces of the housing into
- an inner region A having one or more catalytically active zones (5), in which a packing composed of monoliths (4) stacked on top of one another, next to one another and behind one another and before each catalytically active zone (5) in each case a mixing zone (6) having solid internals are provided, and
- an outer region B arranged coaxially to the inner region A,
- with one or more feed lines (7) for the hydrocarbon-comprising gas stream to be dehydrogenated (2) into the outer region B, deflection of the hydrocarbon stream to be dehydrogenated (2) at one end of the reactor (1) and introduction via a flow equalizer (8) into the inner region A,
- with one or more feed lines (9) which can be regulated independently of one another, where each feed line (9) supplies one or more distribution chambers (10) for the oxygen-comprising gas stream (3) into each of the mixing zones (6) and
- with a discharge line (11) for the reaction gas mixture of the autothermal gas-phase dehydrogenation.

2. The reactor (1) according to claim 1, wherein the hydrocarbon-comprising gas stream to be dehydrogenated (2) is introduced at one end of the reactor (1) into the outer region B, deflected at the other end of the reactor (1) and introduced via a flow equalizer (8) into the inner region A.

3. The reactor (1) according to claim 1 or 2, wherein the housing G arranged therein is configured as a cuboid.

4. The reactor (1) according to any of claims 1 to 3, wherein two or more catalytically active zones (5) each having a packing composed of monoliths (4) stacked on top of, next to and behind one another are provided in the inner region A.

5. The reactor (1) according to any of claims 1 to 4, wherein the monoliths (4) which are stacked next to, above and behind one another to form a packing are enveloped in an expandable mat or a mineral fiber nonwoven and installed in a housing with a tensioning device.

6. The reactor (1) according to any of claims 3 to 5, wherein the side walls of the housing G configured as a cuboid can be taken off individually so that a complete packing or individual monoliths (4) of a packing from a catalytically active zone (5) can be replaced.

7. The reactor (1) according to any of claims 1 to 6, wherein the housing G is made of a material which is heat-resistant but without pressure vessel approval, in particular an alloy steel comprising as alloying elements from about 1.5 to 2.5% of silicon and also nickel and chromium, preferably in a nickel-chromium ratio in the range from 0.5 to 2.0, more preferably from 0.8 to 1.0, particularly preferably from 0.8 to 0.085, in particular a stainless steel having the material number 1.4835, 1.4854 or very particularly preferably 1.4841.

8. The reactor (1) according to any of claims 1 to 7, wherein the outer wall of the reactor (1) is made of an alloy steel approved for pressure vessels, in particular an alloy steel having the material number 1.4541 or 1.4941, clad with an alloy steel having the material number 1.4841, or with a chamotte lining.

9. The reactor (1) according to any of claims 1 to 8, wherein each mixing zone (6) comprises a tube manifold formed by a plurality of parallel plug-in tubes (14) which are arranged in a plane perpendicular to the longitudinal direction of the reactor (1) and are connected to one or more of the distributor chambers (10) and have a plurality of uniformly spaced outlet openings (15) for the oxygen-comprising gas stream (3) from the plug-in tube (14) and also a plurality of uniformly spaced mixing elements (16).

10. The reactor (1) according to claim 9, wherein the mixing elements (16) are configured as mixing plates.

11. The reactor (1) according to any of claims 1 to 10, wherein a shell-and-tube heat exchanger (12) having a bundle of tubes through which the reaction gas mixture for the autothermal gas-phase dehydrogenation is passed and also intermediate spaces between the tubes through which the hydrocarbon-comprising gas stream to be dehydrogenated (2) is passed in countercurrent to the reaction mixture of the autothermal gas-phase dehydrogenation is provided at the end of the reactor at which the discharge line (11) for the reaction gas mixture from the autothermal gas-phase dehydrogenation is located.

12. The reactor (1) according to claim 11, wherein the shell-and-tube heat exchanger (12) is made of a highly heat-resistant stainless steel, in particular a stainless steel having the material number 1.4910, the tubes of the shell-and-tube heat exchanger (12) are installed at both ends of the tubes in tube plates without leaving a gap by backplate welding and the tube plates of the shell-and-tube heat exchanger (12) are clad on the hot gas side of the heat exchanger with a heat-resistant stainless steel, in particular a stainless steel having the material number 1.4841.

13. The reactor (1) according to claim 11 or 12, wherein the shell-and-tube heat exchanger (12) is made of an Inconel® alloy.

14. The reactor (1) according to any of claims 1 to 13, wherein the feed lines (9) for the oxygen-comprising gas stream (3), the distributor chambers (10), the plug-in tubes (14) and the mixing elements (16) for the oxygen-comprising gas stream (3) are made of a highly heat-resistant nickel-chromium-iron alloy in each mixing zone (6), where the total proportion of nickel and chromium is at least 90% by weight of the total mass of the alloy and the nickel/chromium ratio is in the range from about 1.5 to 5.5, preferably about 2.0.

15. The reactor (1) according to claim 14, wherein an Inconel® alloy, in particular Inconel® 690, corresponding to the material number 2.4642, is used as material for the feed lines (9) and the distributor chambers (10).

16. A process for carrying out an autothermal gas-phase dehydrogenation using a reactor according to any of claims 1 to 15.

17. The process according to claim 16, wherein two or more reactors (1) according to any of claims 1 to 15 are used, with at least one reactor (1) being utilized for the autothermal gas-phase dehydrogenation and at least one further reactor (1) being regenerated at the same time.

18. The process according to claim 16 or 17, wherein the autothermal gas-phase dehydrogenation is a dehydrogenation of propane, of butane, of isobutane, of butene to butadiene or of ethylbenzene to styrene.

**Revendications**

1. Réacteur (1) sous la forme d'un cylindre couché pour la mise en oeuvre d'une déshydrogénation autothermique en phase gazeuse d'un courant de gaz (2) contenant un hydrocarbure avec un courant de gaz (3) contenant de l'oxygène avec obtention d'un mélange de gaz de réaction, sur un catalyseur hétérogène, qui est réalisé en forme de monolithe (4), **caractérisé en ce que**

   - l'espace intérieur du réacteur (1) est divisé, par une enceinte G cylindrique ronde ou prismatique, disposée de façon amovible en direction longitudinale du réacteur (1), étanche au gaz en direction périphérique et ouverte dans ses deux faces frontales, en
   - une région intérieure A, avec une ou plusieurs zone(s) catalytiquement active(s) (5), dans laquelle/lesquelles il est respectivement prévu une garniture composée de monolithes (4) empilés les uns sur les autres, les uns à côté des autres et les uns derrière les autres et chaque fois une zone de mélange (6) avec des chicanes fixes avant chaque zone catalytiquement active (5), et
   - une région extérieure B disposée coaxialement à la région intérieure A,
   - avec une ou plusieurs conduite(s) d'alimentation (7) pour le courant de gaz contenant un hydrocarbure à déshydrogéner (2) dans la région extérieure B, déviation du courant d'hydrocarbure à déshydrogéner (2) à une extrémité du réacteur (1) et envoi à travers un redresseur d'écoulement (8) dans la région intérieure A,
   - avec une ou plusieurs conduite(s) d'alimentation (9), réglables indépendamment les unes des autres, chaque conduite d'alimentation (9) alimentant une ou plusieurs chambre(s) de répartiteur (10), pour le courant de gaz contenant de l'oxygène (3) dans chacune des zones de mélange (6), ainsi que
   - avec une conduite d'évacuation (11) pour le mélange de gaz de réaction de la déshydrogénation autothermique en phase gazeuse.

2. Réacteur (1) selon la revendication 1, **caractérisé en ce que** le courant de gaz contenant un hydrocarbure à déshydrogéner (2) est conduit à une extrémité du réacteur (1) dans la région extérieure B, il est dévié à l'autre extrémité du réacteur (1) et il est introduit par un redresseur d'écoulement (8) dans la région intérieure A.

3. Réacteur (1) selon la revendication 1 ou 2, **caractérisé en ce que** l'enceinte G disposée dans celui-ci est réalisée en forme de parallélépipède.

4. Réacteur (1) selon l'une quelconque des revendications 1 à 3, **caractérisé en ce qu'**il est prévu dans la région intérieure A deux ou plusieurs zones catalytiquement actives (5) avec respectivement une garniture composée de monolithes (4) empilés les uns sur les autres, les uns à côté des autres et les uns derrière les autres.

5. Réacteur (1) selon l'une quelconque des revendications 1 à 4, **caractérisé en ce que** les monolithes (4) empilés les uns sur les autres, les uns à côté des autres et les uns derrière les autres en une garniture sont enveloppés dans un tapis gonflant ou un non-tissé de fibres minérales et insérés dans un logement avec un dispositif de serrage.

**6.** Réacteur (1) selon l'une quelconque des revendications 3 à 5, **caractérisé en ce que** les parois latérales de l'enceinte G en forme de parallélépipède sont démontables individuellement, de telle manière qu'une garniture complète ou des monolithes individuels (4) d'une garniture puissent être échangés hors d'une zone catalytiquement active (5).

**7.** Réacteur (1) selon l'une quelconque des revendications 1 à 6, **caractérisé en ce que** l'enceinte G est formée d'un matériau, qui est résistant à la chaleur mais sans autorisation comme réservoir sous pression, en particulier en un acier allié, contenant comme éléments d'alliage environ 1,5 à 2,5 % de silicium, et en outre du nickel et du chrome, de préférence dans un rapport nickel-chrome compris entre 0,5 et 2,0, de préférence encore entre 0,8 et 1,0, et de préférence encore entre 0,8 et 0,085, en particulier en un acier fin portant le numéro de matériau 1.4835, 1.4854 ou de préférence particulière en un acier fin 1.4841.

**8.** Réacteur (1) selon l'une quelconque des revendications 1 à 7, **caractérisé en ce que** l'enveloppe du réacteur (1) est formée en un acier allié agréé pour les réservoirs sous pression, en particulier en un acier allié portant le numéro de matériau 1.4541 ou 1.4941, plaqué avec un acier allié portant le numéro de matériau 1.4841, ou réalisé avec un garnissage de chamotte.

**9.** Réacteur (1) selon l'une quelconque des revendications 1 à 8, **caractérisé en ce que** chaque zone de mélange (6) comprend respectivement un répartiteur tubulaire, formé d'une multiplicité de petits tubes à emboîtement (14) disposés parallèlement les uns aux autres dans un plan perpendiculaire à la direction longitudinale du réacteur (1), qui sont raccordés à une ou plusieurs chambre(s) de répartiteur (10), et qui présentent une multiplicité d'orifices de sortie (15) uniformément espacés les uns des autres pour le courant de gaz contenant de l'oxygène (3) hors du tube à emboîtement (14), ainsi qu'une multiplicité de corps de mélange (16) uniformément espacés les uns des autres.

**10.** Réacteur (1) selon la revendication 9, **caractérisé en ce que** les corps de mélange (16) sont réalisés sous la forme de plaques de mélange.

**11.** Réacteur (1) selon l'une quelconque des revendications 1 à 10, **caractérisé en ce qu'**il est prévu, à l'extrémité du réacteur, à laquelle la conduite d'évacuation (11) pour le mélange de gaz de réaction de la déshydrogénation autothermique en phase gazeuse est disposée, un échangeur de chaleur à faisceau de tubes (12), avec un faisceau de tubes à travers lesquels le mélange de gaz de réaction pour la déshydrogénation autothermique est conduit, ainsi que des espaces intermédiaires entre les tubes, à travers lesquels, à contre-courant avec le mélange des gaz de réaction de la déshydrogénation autothermique en phase gazeuse, le courant de gaz contenant un hydrocarbure à déshydrogéner (2) est conduit.

**12.** Réacteur (1) selon la revendication 11, **caractérisé en ce que** l'échangeur de chaleur à faisceau de tubes (12) est formé en un acier fin résistant à chaud, en particulier en un acier fin portant le numéro de matériau 1.4910, **en ce que** les tubes de l'échangeur de chaleur à faisceau de tube (12) sont introduits aux deux extrémités de celui-ci dans des fonds à tubes sans interstice par soudage arrière au fond et **en ce que** les fonds à tubes de l'échangeur de chaleur à faisceau de tubes (12) sont plaqués, sur leur côté gaz chauds, avec un acier fin résistant à la chaleur, en particulier avec un acier fin portant le numéro de matériau 1.4841.

**13.** Réacteur (1) selon la revendication 11 ou 12, **caractérisé en ce que** l'échangeur de chaleur à faisceau de tubes (12) est formé en un alliage Inconel®.

**14.** Réacteur (1) selon l'une quelconque des revendications 1 à 13, **caractérisé en ce que** les conduites d'alimentation (9) pour le courant de gaz contenant de l'oxygène (3), les chambres de répartiteur (10), les tubes à emboîtement (14) et les corps de mélange (16) pour le courant de gaz contenant de l'oxygène (3) dans chaque zone de mélange (6) sont formés en un alliage nickel-chrome-fer résistant à chaud, la proportion massique de nickel et de chrome valant au total au moins 90 % en poids de la masse totale de l'alliage, et le rapport nickel/chrome se situant entre environ 1,5 et 5,5, de préférence à environ 2,0.

**15.** Réacteur (1) selon la revendication 14, **caractérisé en ce que** l'on utilise comme matériau pour les conduites d'alimentation (9) et les chambres de répartiteur (10) un alliage Inconel®, en particulier l'Inconel® 690, correspondant au numéro de matériau 2.4642.

**16.** Procédé pour la mise en oeuvre d'une déshydrogénation autothermique en phase gazeuse en utilisant un réacteur selon l'une quelconque des revendications 1 à 15.

**17.** Procédé selon la revendication 16, **caractérisé en ce que** l'on utilise deux ou plusieurs réacteurs (1) selon l'une quelconque des revendications 1 à 15, au moins un réacteur (1) étant utilisé pour la déshydrogénation autothermique en phase gazeuse et au moins un autre réacteur (1) étant en même temps régénéré.

**18.** Procédé selon la revendication 16 ou 17, **caractérisé en ce que** la déshydrogénation autothermique en phase gazeuse est une déshydrogénation de propane, de butane, d'isobutane, de butène en butadiène ou d'éthylbenzène en styrène.

FIG.1

FIG.2

# FIG.3

# FIG.4

# FIG.5

# FIG.6A

# FIG.6B

FIG.7

FIG.7A

# FIG.8

4          18          4

# FIG.9

4

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7034195 B
- US 20080119673 A
- US 61179918 B
- DE 4026566 A